(19) Europäisches Patentamt / European Patent Office / Office européen des brevets

(11) **EP 2 379 877 B1**

(12) **EUROPEAN PATENT SPECIFICATION**

(45) Date of publication and mention
of the grant of the patent:
**16.09.2015 Bulletin 2015/38**

(21) Application number: **10701898.8**

(22) Date of filing: **19.01.2010**

(51) Int Cl.:
***F03B 13/14*** *(2006.01)*

(86) International application number:
**PCT/GB2010/000071**

(87) International publication number:
**WO 2010/084305 (29.07.2010 Gazette 2010/30)**

(54) **WAVE POWER CAPTURE SYSTEM AND METHOD**

WELLENENERGIEERFASSUNGSSYSTEM UND VERFAHREN

SYSTÈME ET PROCÉDÉ DE CAPTAGE D'ÉNERGIE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **20.01.2009 GB 0900912**

(43) Date of publication of application:
**26.10.2011 Bulletin 2011/43**

(73) Proprietor: **Aquamarine Power Limited
Glasgow G2 5NJ (GB)**

(72) Inventor: **CROWLEY, Michael
Gloucestershire GL2 7EL (GB)**

(74) Representative: **Hargreaves, Timothy Edward et al
Marks & Clerk LLP
Atholl Exchange
6 Canning Street
Edinburgh EH3 8EG (GB)**

(56) References cited:
**WO-A1-01/96737          WO-A1-2008/094046
WO-A1-2008/128307    GB-A- 2 033 488
US-A- 4 781 023**

## Description

### Field of the invention

The present invention relates to a power capture system and method, and in particular to a power capture system and method for obtaining electrical power from wave energy.

### Background to the invention

Concerns about global warming and environmental pollution caused by the use of fossil fuels in energy generation has resulted in a move towards so-called 'green' energy sources, or renewable energy sources such as tidal movement, wave power and wind power.

Hydroelectric power systems, in which the flow from a head of water, for example a reservoir, drives operation of turbines to produce electrical power are well known. Such hydroelectric power systems are relatively easy to control and the pressure and flow rate of the water are stable. Operating conditions of the turbines and associated generators can be tuned relatively easily to the prevailing conditions to provide maximum efficiency and electrical power output.

It has long been recognised that the waves in the sea and other bodies of water provide a vast and substantially untapped quantity of energy and many inventions have been made with the goal of achieving the aim of extracting power from the sea. However, the extraction of energy from wave power presents technical difficulties due in particular to the oscillating nature of the waves and to the significant variations in prevailing wave conditions over time.

There are numerous examples of wave power capture systems. Such systems include mechanical devices that are moved by operation of the waves, and power conversion systems that convert the resulting mechanical energy into electrical energy. However, such known wave power capture systems have generally included power conversion systems that are located sub-sea, at or near the mechanical devices, which makes installation, maintenance and control of the power conversion systems difficult. In many cases, oil hydraulics are used in the power conversion systems, which provide additional environmental risks, for example in the event of sub-sea leakage. Furthermore currently available examples of such oil hydraulic systems have relatively low maximum power limits and are not easily scaleable to higher powers. In addition, the devices have tended to produce power unevenly with large 'spikes' in the output, making it difficult to provide a smooth power output suitable for delivery into an electrical grid system.

A previous patent application, WO2006/100436, filed in the name of the present applicants, disclosed a wave power capture system comprising a wave energy conversion device for use in relatively shallow water, which addressed some of the problems associated with previously known wave power capture systems.

The wave energy conversion device of WO2006/100436 comprises a flap portion biased to the vertical in use and formed and arranged to oscillate backwards and forwards about the vertical in response to wave motion acting on faces of the flap portion. The flap portion is coupled to a hydraulic circuit via a positive displacement pump such that oscillation of the flap portion causes the flow of fluid through the hydraulic circuit, which drives operation of a variable displacement hydraulic motor. The hydraulic motor drives a flywheel, which stores energy from the motor until it is converted into electricity by an induction generator connected to the flywheel.

The flow of hydraulic fluid through the hydraulic circuit is pulsating. The magnitude and timing of the pulses are irregular because they are dependent on the waves which are also irregular. Because of the irregular wave patterns and the pulsing flow, the instantaneous power (product of flow and pressure) being delivered down the pipe line can be significantly greater than the average power, typically 10 times greater. That means that the torque experienced by the motor can vary greatly over each wave cycle, which in turn can make efficient extraction of electrical power difficult. Additionally the pulsating flow along the pipe results in surge (water hammer) which increases the difficulty of controlling the system.

Whilst the system of WO2006/100436 does provide a practical means of extracting energy from waves, and in converting extracted energy into electrical energy, there is an ongoing need for improved or at least alternative apparatus and methods for generating electrical energy from waves. In particular there is on ongoing need for apparatus that is readily scaleable to higher powers and that provides for ease of installation, control and maintenance.

Document WO 2008/094046 discloses a wave energy conversion device which periodically controls the rate of flow of pressurized liquid to a turbine to generate electricity.

### Summary of the invention

In a first aspect of the invention there is provided a wave power capture system, comprising:- a fluid transfer conduit for connection to a wave energy conversion device such that, in operation, the wave energy conversion device pressurises fluid in the fluid transfer conduit in response to wave motion; a turbine apparatus arranged to receive fluid from the fluid transfer conduit; at least one sensor for sensing at least one of pressure and flow rate of the fluid; at least one sensor for determining at least one of speed of rotation and torque of the turbine apparatus; a variable opening valve for controlling the rate of flow of fluid from the fluid transfer conduit to the turbine apparatus; a controller; and an electrical power generation system comprising a variable torque electrical generator for obtaining electrical power from operation of the turbine apparatus, wherein the controller is configured to control operation of the variable opening valve in dependence upon the pressure or flow rate of the fluid sensed by the sensor and the speed of rotation or torque, and the controller is configured to continuously vary opening of the variable opening valve and continuously vary torque applied by the variable torque electrical generator during a wave cycle thereby to substantially maintain a desired ratio of the speed of rotation of the turbine apparatus to the speed of fluid applied to the turbine apparatus during the wave cycle.

By providing for the control of the rate of flow of fluid from the fluid transfer conduit, the controller is able to assist in controlling the turbine apparatus to operate in an efficient range, despite surges in pressure associated with the wave motion.

The system may further comprise potential energy storage means located between the wave energy conversion device and the variable opening valve.

Preferably the potential energy storage means is connected to the fluid transfer conduit and is operable to store energy associated with variations in pressure of the fluid in the fluid transfer conduit. The potential energy storage means may comprise an accumulator.

By providing potential energy storage means, for example an accumulator, between the wave energy conversion device and the variable opening valve, energy surges arising from increases in pressure in the fluid caused by the wave motion can be at least partially damped. Rather than dumping such energy through, for example, a pressure release valve, or allowing the associated increase in pressure to adversely affect operation of the wave energy conversion device, or opening at least one variable opening valve to a level outside a desired or optimal range to release the pressure, the potential energy storage means can store the energy temporarily, and release it as the energy elsewhere in the system decreases.

The turbine apparatus may comprise a flywheel. The flywheel is preferably able to store excess energy arising from surges in pressure in the fluid transfer conduit, and corresponding surges in the flow rate to the turbine apparatus. The speed of the turbine apparatus can be maintained in an efficient range due to storage of some of the excess energy by the flywheel. The excess energy can subsequently be released via application of torque to the turbine apparatus by the electrical power generation system.

By providing both of these potential energy storage means, for example an accumulator and a flywheel, and by also providing for control of the variable opening valve, the turbine apparatus and/or the electrical power generation system can be maintained effectively at an efficient operating point without adverse impact on operation of the wave energy conversion device. The system can be arranged to operate to provide retention of the maximum amount of energy in the system (in a stable fashion) through temporary energy storage (mechanically in the flywheel, and hydraulically in the accumulators).

The control provided by the variable opening valve allows for different fluids to be used in the system. The fluid may comprise water, preferably sea water which provides little or no environmental impact. The use of water (or a similar fluid) as the fluid in the fluid transfer conduit enables (for example due to its flow properties and low risk of environmental impact from leaks from the fluid transfer conduit) the turbine apparatus and the variable opening valve (and, in turn, the controller and electrical power generation system) to be situated remotely from the wave energy conversion device. Thus, the turbine apparatus and/or the variable opening valve and/or the controller and/or the electrical power generation system and/or the at least one sensor may be located above the surface of the sea, and preferably are located on-shore. The system may be arranged so that in normal operation control signals and sensor signals are transmitted between components that are located on-shore, and is preferably arranged so that in normal operation (excluding shut-down, start-up or over-ride procedures) control and/or sensor signals are not transmitted between on-shore and off-shore components.

The control provided by the variable opening valve, and the use of (for example) water as the fluid, allows for different turbine apparatus to be used. For example, the turbine apparatus may comprise an impulse turbine, and preferably comprises a Pelton wheel. Impulse turbines, in particular Pelton wheels, are robust, efficient and readily scaleable for high power applications.

The controller may be configured to vary the opening of the variable opening valve during each wave cycle according to the extent of variation in pressure and/or flow rate and/or speed of rotation during each wave cycle. A wave cycle is the time between successive wave peaks (or troughs).

The controller may vary the flow rate through the variable opening valve during each wave cycle in order to reduce the variations in pressure and/or flow rate and/or speed of rotation during each wave cycle. Thus, more efficient operation of the system may be obtained.

The controller may vary the opening of the variable opening valve to have a plurality of different openings during each wave cycle.

The controller may be configured to control operation of the variable opening valve in dependence on a difference between an actual pressure and a target pressure and/or in dependence on a difference between an actual flow rate and a target flow rate.

The actual pressure may be the pressure measured by the sensor, or may be a pressure calculated from one or more other measurements. The system may further comprise a flow meter and the actual flow rate may comprise a measured flow rate. Alternatively or additionally, the flow rate may comprise a calculated flow rate.

The controller may be configured to monitor the difference between the actual pressure and the target pressure and/or the difference between the actual flow rate and the target flow rate, during each wave cycle and to control operation of the variable opening valve in dependence on the difference so as to vary the actual pressure and/or the actual flow rate during each wave cycle.

The controller may be configured to control operation of the variable opening valve in dependence on a predetermined time constant, representative of a target time for reducing the difference between the actual pressure and the target pressure, or between the actual flow rate and the target flow rate.

Preferably the target time is a target time for reducing the difference between the actual pressure and the target pressure (or between the actual flow rate and the target flow rate) to be substantially equal to zero.

The target pressure and/or flow rate may be substantially equal to a pressure and/or flow rate that provides a maximum efficiency and/or a maximum power output of the system.

The system may further comprise a sensor for measuring the speed of rotation of the turbine apparatus, wherein the controller is configured to determine the target pressure and/or flow rate in dependence on the measured speed of rotation.

The target pressure and/or flow rate may be a pressure or flow rate that provides for a desired efficiency of operation (for example maximum efficiency of operation) of the turbine apparatus for the measured speed of rotation. The target pressure and/or flow rate may be selected to provide a value of Ku within a desired range, preferably between 0.4 and 0.6, where Ku is representative of the ratio of the speed of rotation to the speed of the fluid provided to the turbine apparatus.

The electrical power generation system may comprise a variable torque electrical generator, and the controller may be configured to control the torque applied to the turbine apparatus by the variable torque electrical generator.

The controller may be configured to vary the torque applied to the turbine apparatus by the variable torque electrical generator during each wave cycle in dependence upon a variation in torque experienced by and/or speed of rotation of the turbine apparatus during each wave cycle. The controller may be configured to vary the torque applied to the turbine apparatus by the variable torque electrical generator during each wave cycle in dependence upon a variation in the torque applied to the turbine apparatus by the fluid.

Preferably the controller is configured to vary both torque or speed and pressure or flow rate during each wave cycle.

The controller may be configured to vary both (i) the opening of the variable opening, valve during each wave cycle in dependence upon a variation in pressure and/or flow rate and/or speed of rotation during each wave cycle and (ii) the torque applied to the turbine apparatus by the variable torque electrical generator during each wave cycle in dependence upon a variation in torque and/or speed of rotation of the turbine apparatus during each wave cycle.

By varying both the opening of the variable opening valve and the torque applied to the turbine apparatus by the variable torque electrical generator during each wave cycle, variations in pressure/flow rate and/or torque/speed during each wave cycle can be reduced.

The controller may be configured to control the torque applied to the turbine apparatus in dependence on a difference between an actual torque and a target torque and/or in dependence on a difference between an actual speed and a target speed.

The actual torque may be the torque measured by the torque and/or speed sensor, or may be a torque calculated from one or more other measurements. Alternatively or additionally, the actual speed may be a speed measured by the torque and/or speed sensor, or may be a speed calculated from one or more other measurements.

The controller may be configured to vary the torque applied to the turbine apparatus during each wave cycle in dependence on the difference between the actual torque and the target torque and/or in dependence on the difference between the actual speed and the target speed.

The controller may be configured to control the torque applied to the turbine apparatus in dependence on a further predetermined time constant, representative of a target time for reducing the difference between the actual torque and the target torque or between the actual speed and the target speed.

Preferably the further target time is a target time for reducing the difference between the actual torque and the target torque (or between the actual speed and the target speed) to be substantially equal to zero.

The target torque and/or speed of rotation may be substantially equal to a torque and/or speed of rotation that provides an optimum efficiency and/or a maximum power output.

The controller may be configured to determine at least one of the target pressure, target flow rate, target torque or target speed in dependence on the value of an ideal operating pressure and/or the value of an ideal operating speed.

The controller may be configured to select the value of the ideal operating pressure and/or the value of the ideal operating speed automatically.

The controller may be configured to select the value of the ideal operating pressure and/or the value of the ideal operating speed in dependence on measured or expected wave conditions.

The controller may be configured to select the value of the ideal operating pressure and/or the value of the ideal operating speed in dependence on the electrical power output obtained from the system.

The controller may be configured to select the value of the ideal operating pressure and/or the value of the ideal operating speed in order to substantially maximise the electrical power output from the system.

The controller may be configured to determine the electrical power output provided by the system (when controlled according to at least two different values of the ideal operating pressure and/or ideal operating speed) so as to compare the electrical power output obtained for the at least two different values of the ideal operating pressure and/or ideal operating speed; and then to select a value for the ideal operating pressure and/or ideal operating speed in dependence on the comparison.

The controller may be configured to use a selected value of ideal operating pressure and/or ideal operating speed during a measurement time, to determine electrical power output during the measurement time, so as to compare the determined electrical power output with the electrical power output obtained using at least one other value of ideal operating pressure and/or ideal operating speed during at least one previous measurement time; and then to select a value for the ideal operating pressure and/or ideal operating speed for use in a subsequent measurement time in dependence on the comparison.

The controller may be configured to increase or decrease the value of ideal operating pressure and/or ideal operating speed in increments, to measure the rotational power output that is provided to the electrical power generation system during a measurement time for each incremental value of ideal operating pressure and/or ideal operating speed, so as to determine whether the rotational power output is greater than or less than the rotational power output for the immediately preceding measurement time; then to continue incrementally increasing or decreasing the value of ideal operating pressure and/or ideal operating speed if the rotational power output is greater than the power output for the immediately preceding measurement time, and to change between incrementally increasing and incrementally decreasing the value of ideal operating pressure and/or ideal operating speed if the rotational power output is less than the power output for the immediately preceding measurement time.

The measurement time is preferably longer than a wave period. The measurement time may be greater than or equal to 10, 100, or 1,000 times a wave period.

The controller may be configured to calculate a value of ideal operating speed from a selected value of ideal operating pressure, or vice versa.

The controller may be configured to control operation of the variable opening valve in dependence on a model that represents operation of the turbine. The controller may be configured to control the torque applied to the turbine apparatus by the variable torque electrical generator in dependence on the or a model that represents operation of the turbine.

The model may represent speed or torque as a function of pressure or flow rate or vice versa. The model may represent the ideal speed as a function of ideal pressure or vice versa. The model may represent speed as proportional to the square root of pressure. The model may comprise or be representative of the equa-

tion, $\omega = \dfrac{2C_v KuNom}{D}\sqrt{\dfrac{2P}{\rho}}$

The controller may be configured to control operation of the system to provide a ratio of speed of rotation of the turbine apparatus to the speed of fluid received by the turbine apparatus to be within a desired range. The controller may be configured to control operation of the system to provide a value of Ku within the range 0.4 to 0.6.

The system may comprise a plurality of fluid transfer conduits, each for connection to a respective wave energy conversion device such that, in operation, each wave energy conversion device pressurises fluid in a corresponding one of the fluid transfer conduits in response to wave motion, wherein the turbine apparatus is arranged to receive fluid from each of the fluid transfer conduits.

In an embodiment there is provided a power extraction system for a wave power capture system, comprising:- a fluid transfer conduit for connection to a wave energy conversion device that, in operation, pressurises fluid in the fluid transfer conduit in response to wave motion; a pelton wheel arranged to receive fluid from the fluid transfer conduit; and an electrical power generation system for obtaining electrical power from operation of the pelton wheel.

The turbine apparatus may further comprise a flywheel.

In an embodiment, there is provided a controller for a wave power capture system, comprising a processor configured to receive signals from a sensor measuring either or both of pressure and/or flow rate of a fluid that is pressurised in a fluid transfer conduit by a wave energy conversion device in response to wave motion, and then to provide control signals for controlling operation of a variable opening valve so as to control the rate of flow of fluid from the fluid transfer conduit to a turbine apparatus in dependence upon the pressure and/or flow rate of the fluid.

In a further independent aspect of the invention there is provided a method as recited in appended independent Claim 13..

The method may further comprise storing potential energy at a potential energy storage means located between the wave energy conversion device and the variable opening valve.

The method may comprise varying the opening of the variable opening valve during each wave cycle in dependence upon a variation in pressure and/or flow rate and/or speed of rotation during each wave cycle.

The method may comprise controlling operation of the variable opening valve in dependence on a difference between an actual pressure and a target pressure and/or in dependence on a difference between an actual flow rate and a target flow rate.

The method may comprise monitoring the difference between the actual pressure and the target pressure and/or the difference between the actual flow rate and the target flow rate during each wave cycle and controlling operation of the variable opening valve in dependence on the difference so as to vary the actual pressure and/or the actual flow rate during each wave cycle.

The method may comprise controlling operation of the variable opening valve in dependence on a predetermined time constant, representative of a target time for reducing the difference between the actual pressure and the target pressure or between the actual flow rate and the target flow rate.

The target pressure and/or flow rate may be substantially equal to a pressure and/or flow rate that provides a maximum efficiency and/or a maximum power output of the system.

The method may further comprise measuring the speed of rotation of the turbine apparatus, and determining the target pressure and/or flow rate in dependence on the measured speed of rotation.

The method may further comprise controlling the torque applied to a turbine apparatus by a variable torque electrical generator.

The method may comprise varying the torque applied to the turbine apparatus by the variable torque electrical generator during each wave cycle in dependence upon a variation in torque and/or speed of rotation of the turbine apparatus during each wave cycle.

The method may comprise varying both (i) the opening of the variable opening valve during each wave cycle in dependence upon a variation in pressure and/or flow rate and/or speed of rotation during each wave cycle and (ii) the torque applied to the turbine apparatus by the variable torque electrical generator during each wave cycle in dependence upon a variation in torque and/or speed of rotation of the turbine apparatus during each wave cycle.

The method may comprise controlling the torque applied to the turbine apparatus in dependence on a difference between an actual torque and a target torque and/or in dependence on a difference between an actual speed and a target speed.

The method may comprise varying the torque applied to the turbine apparatus during each wave cycle in dependence on the difference between the actual torque and the target torque and/or in dependence on the difference between the actual speed and the target speed.

The method may comprise controlling the torque applied to the turbine apparatus in dependence on a further predetermined time constant, representative of a target time for reducing the difference between the actual torque and the target torque or between the actual speed and the target speed.

The method may comprise determining at least one of the target pressure, target flow rate, target torque or target speed in dependence on the value of an ideal operating pressure and/or the value of an ideal operating speed.

The method may comprise selecting the value of the ideal operating pressure and/or the value of the ideal operating speed automatically.

The method may comprise selecting the value of the ideal operating pressure and/or the value of the ideal operating speed in dependence on the electrical power output obtained from the system.

The method may comprise determining the electrical power output provided by the system when controlled according to at least two different values of the ideal operating pressure and/or ideal operating speed to compare the electrical power output obtained for the at least two different values of the ideal operating pressure and/or ideal operating speed, and to select a value for the ideal operating pressure and/or ideal operating speed in dependence on the comparison.

The method may comprise using a selected value of ideal operating pressure and/or ideal operating speed during a measurement time, so as to determine electrical power output during the measurement time; then comparing the determined electrical power output with the electrical power output obtained using at least one other value of ideal operating pressure and/or ideal operating speed during at least one previous measurement time, to select a value for the ideal operating pressure and/or ideal operating speed for use in a subsequent measurement time in dependence on the comparison.

The measurement time may be longer than a wave period.

The method may comprise calculating a value of ideal operating speed from a selected value of ideal operating pressure, or vice versa.

The method may comprise controlling operation of the variable flow rate valve in dependence on a model that represents operation of the turbine.

The method may comprise controlling the torque applied to the turbine apparatus by the variable torque electrical generator in dependence on the or a model that represents operation of the turbine.

The model may represent speed or torque as a function of pressure or flow rate or vice versa.

The model may represent speed as proportional to the square root of pressure.

The model may comprise or be representative of the equation, $\omega = \dfrac{2C_v\,KuNom}{D}\sqrt{\dfrac{2P}{\rho}}$

The method may comprise controlling operation to provide a ratio of speed of rotation of the turbine apparatus to the speed of fluid received by the turbine apparatus to be within a desired range.

The method may comprise controlling operation to provide a value of Ku within the range 0.4 to 0.6.

There may be provided a computer program product comprising computer readable instructions that are executable to perform a method as claimed or described herein. There may also be provided a system or method substantially as described herein with reference to the accompanying drawings.

Any feature in one aspect of the invention may be applied to other aspects of the invention, in any appropriate combination. For example, apparatus or system features may be applied to method features and vice versa.

## Detailed description of embodiments

Embodiments of the invention are now described, by way of non-limiting example, and are illustrated in the following figures:-

Figure 1 is a schematic diagram of a wave power capture system;

Figure 2 is a graph of efficiency versus parameter $K_u$ for a Pelton wheel;

Figure 3 is flow chart illustrating in overview the control of operating speed and pressure in a short term control procedure, and the adjustment of an ideal pressure parameter in a long term control procedure, for the controller of the wave power capture system;

Figure 4 is a more detailed flow chart illustrating a control procedure for the controller of the wave power capture system of Figure 1;

Figure 5 is a flow chart illustrating a self-optimisation process for tuning the system to the prevailing wave climate; and

Figure 6 is a flow chart illustrating a start-up procedure and safety procedures for a mode of operation of the wave power capture system of Figure 1.

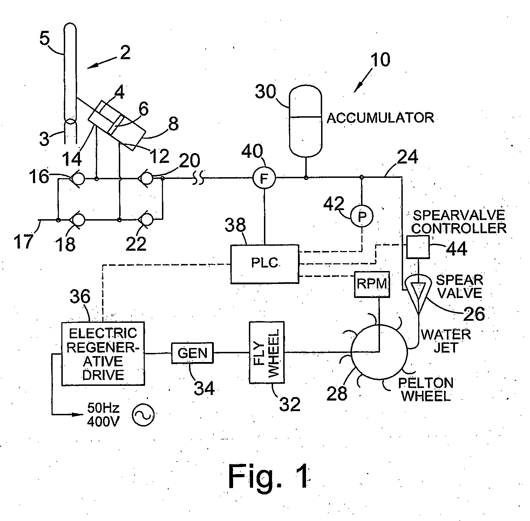

Fig.1 is a schematic illustration of a power generation system for conversion of the oscillating motion of a wave energy conversion device to electricity.

The system includes a wave energy conversion device 2, coupled by a suitable linkage and a driving rod 4 to a hydraulic ram (piston) 6 which reciprocates in a cylinder 8 and is double acting.

The cylinder 8 forms part of a hydraulic circuit 10 to which it is connected by an inlet/outlet port 12 at one end of the cylinder, an inlet/outlet port 14 at the opposite end of the cylinder 8, and an arrangement of non-return valves 16, 18, 20, 22.

The wave energy conversion device 2 comprises a base portion anchored to the bed of the sea or other body of water and an upstanding flap portion 5, of generally rectangular form, mounted for rotation about a pivot axis to the base 2. An example of a suitable wave energy conversion device 2 is described, for example, in WO 2006/100436. In operation the flap portion 5 is placed to face the direction of wave motion, and the wave motion causes the flap portion to oscillate about the pivot axis, which in turn drives the ram 6 back and forth in the cylinder 8.

In operation, the ram 6 is driven backwards and forwards in the cylinder 8 by oscillation of the flap portion 5 caused by the wave motion. On each forwards stroke of the ram, low pressure sea water from inlet pipe 17 is drawn into the cylinder 8 through port 14 via non-return valve 16, and high pressure sea water is pumped out of the cylinder 8 through port 12 and non-return valve 22 into the fluid conduit 24. On each backwards stroke of the ram, low pressure sea water from inlet pipe 17 is drawn into the cylinder 8 through port 12 via non-return valve 18, and high pressure sea water is pumped out of the cylinder 8 through port 14 and non-return valve 20 into the fluid conduit 24.

The fluid conduit 24 forms part of the hydraulic circuit 10 and connects the outlets 12, 14 of the cylinder 8 to a pair of spear valves 26 (only a single spear valve is shown for clarity). The spear valves 26 are aligned with a Pelton wheel 28, such that in operation a water jet is forced out of the spear valves and into Pelton wheel buckets, driving rotation of the Pelton wheel 28.

The hydraulic circuit of the system of Figure 1 is an open circuit, in that the sea water is not returned to the system after it has exited the Pelton wheel, but instead is passed back into the sea via a drainage conduit (not shown). In an alternative embodiment, the hydraulic circuit is a closed circuit and the hydraulic fluid is discharged from the Pelton wheel 28 into a storage or buffer tank, from where it is returned to the inlet pipe 17 via a return conduit.

An accumulator 30, comprising a pressure cylinder containing air, is connected to the fluid conduit 24 between the non-return valves 20, 22 and the spear valves 26. The mass of air in the accumulator 30, its pre-charge pressure ($P_A$) and the volume of the accumulator 30 ($V_A$) are known. As fluid is pumped out of the cylinder 8 into the fluid conduit 24 the air is compressed to store some of the pressure produced by the pumping action of the ram 6. This has the effect of smoothing variations in the pressure (P) of the fluid in the fluid conduit 24 that is delivered to the Pelton wheel 28.

The Pelton wheel 28 is connected to and drives a flywheel 32. The flywheel stores energy from the Pelton wheel until it is converted into electricity by an induction generator/motor 34 which connects to the flywheel 32. The Pelton wheel 28, the flywheel 32 and the shaft linking the Pelton wheel 28 and the flywheel 32 together form a turbine apparatus. The output from the induction generator 34 is converted via an electric regenerative drive 36 suitable for connection to an electricity grid (not shown).

A controller 38 (usually a programmable logic controller) is connected to the electric regenerative drive 36 and generator 34 and is operable to control the level of torque applied to the flywheel 32 by the generator and thus the level of power extracted by the generator 34 from the flywheel 32. The controller 38 includes a computer interface via which an operator can select and modify various parameters or control operation of the system if desired.

In the embodiment of Figure 1, the wave energy conversion device 2, the cylinder 8 and the arrangement of non-return valves 14, 16, 18, 20 are located offshore. The other components of the system, from the flow meter 40 downstream, are located on-shore. As the number of offshore or sub-sea components is minimised, and the more sensitive electronic components are located on-shore, installation and maintenance of the system is straightforward. Furthermore, in normal operation (excluding shut-down, start-up or over-ride procedures) control and sensor signals do not need to be transmitted between on-shore and off-shore components, making the system robust and relatively easy to maintain. In alternative embodiments, some or all of the components from the flow meter 40 downstream are located off-shore on a structure, for example a platform, raised above the surface of the sea. Again, installation and maintenance is relatively straightforward compared to systems in which such components are located below the surface of the sea.

The induction generator/motor 34 and the associated electric regenerative drive 36 form a variable speed electrical generator system which is used to keep the flywheel 32 spinning within its optimum range by extracting power from the flywheel 32 in a controlled manner, as described in more detail below.

The controller 38 is arranged to receive rotational speed signals, that represent the speed of rotation ($\omega$) of the turbine apparatus, from two independent sources:- a tacho/encoder (not shown) on the end of the flywheel 32 and from the electrical regenerative drive 36.

The controller 38 is also connected to a flow meter 40 and a pressure meter 42 for measuring the flow rate (F) and pressure (P) of fluid flowing through the fluid transfer conduit 24. The flow meter 40 provides a 4 to 20mA signal. If the signal drops below 4mA it is assumed that the flow meter 40 has failed and the system shuts down. The pressure meter 42 comprises two independent pressure gauges, and provides system redundancy as only one pressure signal is required.

The controller 38 is connected to a spear valve controller 44 that, under control of the controller 38, determines the opening of, and thus the flow rate through, the spear valves 26. Each spear valve optionally provides a dedicated fractional opening signal (X1 and X2 respectively) to the controller 38 that represents the fractional opening of the respective spear valve, and that is used as a check to ensure that the spear valves have opened to the level instructed by the controller 38

The primary control of the system is obtained by metering the flow of water through the spear valves 26 onto the Pelton wheel 28 and by controlling the torque applied by the generator 34. The primary inputs into the controller 38 are the water flow rate (F), the pressure (P), the rotational speed ($\omega$) of the turbine apparatus (comprising the Pelton wheel 28, flywheel 32 and shaft) and, optionally, the spear valve openings ($X_1$, $X_2$).

The controller 38 controls three main output parameters:

1. The braking torque ($T_G$) applied to the turbine apparatus (comprising the Pelton wheel 28, flywheel 32 and connecting shaft) via the generator 34. This torque is limited by the rating of the drive 36 and generator 34. The controller 38 sends a signal to the regenerative drive 36 representative of required torque.

2. The fractional opening of the spear valves 26. Each spear valve receives a position control signal (X) from the controller 38. The speed at which each spear valve can open and close is limited by performance of an actuator used to control the spear valve. Therefore, the spear valve position may lag behind the requested position.

3. The opening of dump valves (not shown). The controller 38 uses a two state output signal, open or closed, to control the dump valves. The same output signal may be used to drive both valves. On loss of control or electrical power the dump valves are controlled to go to the open position.

The controller 38 continuously monitors the instantaneous values of flow, pressure and torque throughout each wave cycle and continuously adjusts the torque applied by the generator 34 and the opening of the spear valves 26, in order to provide for efficient operation and control of the Pelton wheel 28.

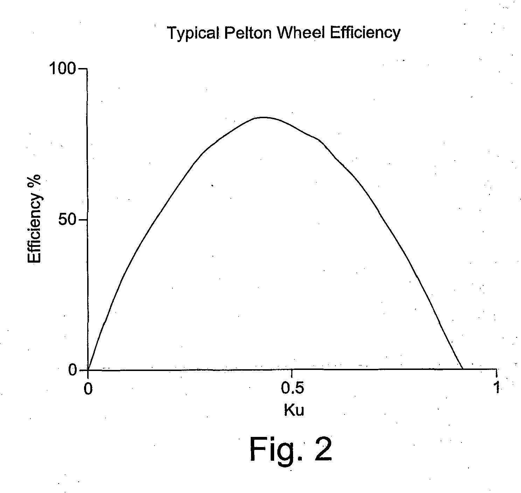

Normally a Pelton wheel is arranged to operate so that the speed of rotation of the buckets is just under half the speed of the water jet. That ensures that the Pelton wheel operates at maximum efficiency. The ratio of wheel speed to jet speed is represented by the parameter Ku. Figure 2 shows the usual relationship between Ku and efficiency, for a Pelton wheel operating under steady state conditions.

For most Pelton wheel applications it is relatively straightforward to design a Pelton wheel with Ku at the ideal conditions, as the Pelton wheel operates at the synchronous speed of the generator. For example, in hydroelectric applications, the water usually comes from a constant head source such as a dam, so the water jet velocity is relatively constant. It is then just a case of choosing the correct generator speed and bucket diameter to get the optimal value for Ku.

In contrast, for wave power applications the speed of rotation and water jet velocity are continually changing by a large amount during each wave period making control and efficient operation difficult. If known control procedures were to be used to control a Pelton wheel for wave power applications, it would be expected that the instantaneous value of Ku would vary widely during each wave period.

It is a feature of the system that the controller 38 is operable to control the pressure in the system during each wave cycle, by controlling the level of opening of the spear valves during each wave cycle. By providing such control over timescales shorter than the wave period, the controller 38 is able to provide improved control and efficiency of power extraction despite the large variations in the energy input to the system by the wave motion during each wave cycle.

The controller 38 is also able to control the speed of the turbine apparatus by controlling the level of power extracted by the generator 34 from the turbine apparatus continuously, during each wave cycle. Again, that provides for improved efficiency of electrical power extraction.

It is another feature of the system that the controller is also operable to determine an ideal operating pressure ($P_I$) for the fluid in the fluid transfer conduit 24 and use that ideal operating pressure ($P_I$) in control of the system. The ideal operating pressure ($P_I$) is the optimal hydraulic pressure at the accumulator 30 in the fluid conduit 24 that produces the maximum electrical power output from the system. The ideal operating pressure ($P_I$) is used to calculate an ideal operating speed ($\omega_I$) for the turbine apparatus, which in turn is used in the control of the speed of the turbine apparatus.

In practice there are significant fluctuations in the pressure in the fluid conduit 24 and at the accumulator 30 during each wave cycle, but the value of the ideal operating pressure that is used by the controller 38 influences the average or typical pressure, and speed of rotation, which in turn affects the efficiency of operation and the electrical power output of the system.

The value of the ideal operating pressure ($P_I$) that is used in control of the pressure and the turbine apparatus speed is adjusted based upon measured electrical power output from the system over a measurement time that is significantly longer than a wave period. The controller 38 adjusts the value of the ideal operating pressure in order to ensure that the electrical power output is at or near the maximum for the prevailing wave conditions.

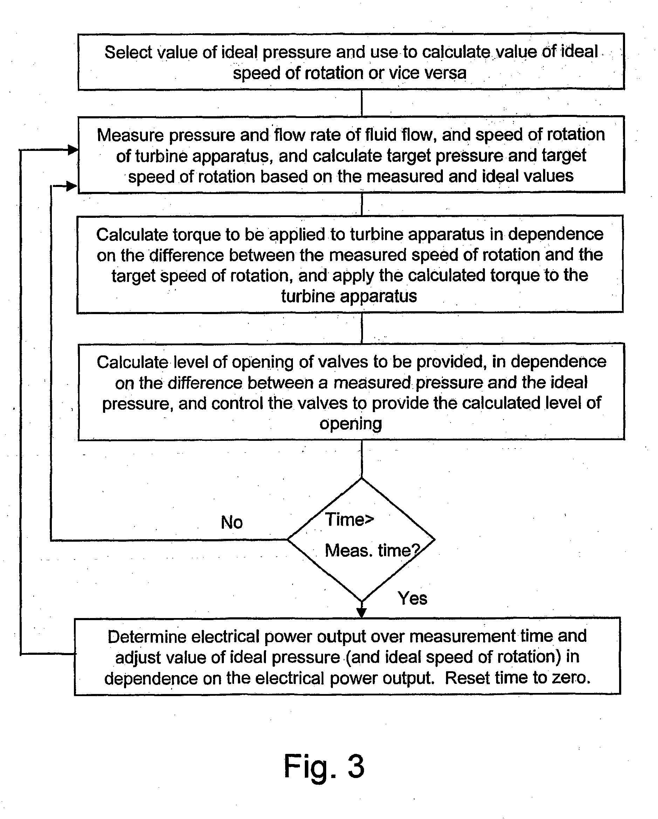

The short and long term control procedures used by the controller 38 are illustrated in overview in the flow chart of Figure 3, and examples of such procedures are now described in more detail.

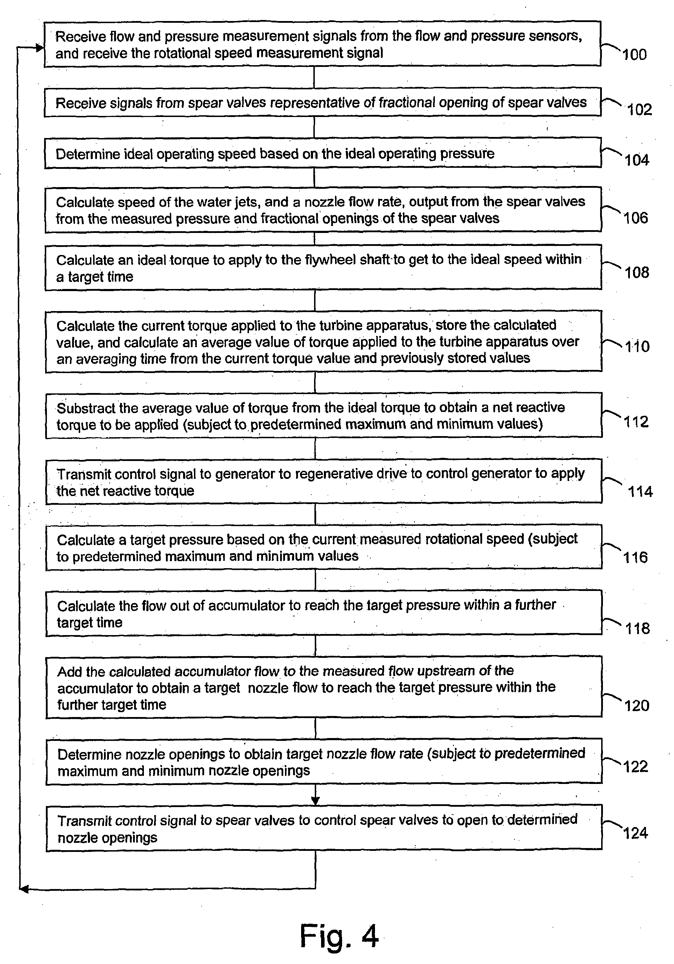

One example of a procedure for the short term control of pressure and is illustrated in more detail in the flow chart of Figure 4. The controller 38 uses a ladder-type sequence to control the braking torque ($T_G$) and the fractional opening (X) of the spear valves. The sequence is repeated continuously, usually at a frequency of around 20Hz.

In the first stage 100 of the sequence, the controller 38 receives measurement signals from the flow meter 40 and the pressure meter 42 representative of the flow rate (F) of the fluid through the fluid conduit 24 upstream of the accumulator 30 and the pressure (P) of the fluid in the fluid conduit 24. The controller 38 also receives measurement signals from the tacho/encoder and the electric regenerative drive representative of the speed of rotation ($\omega$) of the turbine apparatus.

The controller also receives signals from the spear valve actuator representative of the current level of opening ($X_1$ and $X_2$) of the spear valves.

The speed of rotation (w) of the Pelton wheel 28 is continuously changing during each wave cycle. However the Pelton wheel has an ideal rotational speed ($\omega_1$), and the controller 38 tries to maintain the shaft speed at the ideal rotational speed ($\omega_I$). The ideal rotational speed ($\omega_I$) is calculated from the ideal operating pressure ($P_I$) using equation (1) or is read from memory (the ideal rotational speed is usually only updated when the ideal operating pressure is updated) at the next stage 104 of the sequence. The ideal operating pressure $P_I$ is set either manually or automatically (as described in more detail below) and its value is already known and is stored by the controller 38.

$$(1) \qquad \omega_I = \frac{2 C_V \, KuNom}{D} \sqrt{\frac{2P_I}{\rho}}$$

in which D is the effective Pelton wheel diameter, KuNom is representative of the ratio of wheel speed to jet speed and is a dimensionless parameter, $\rho$ is the density of water, and Cv is the coefficient of nozzle velocity, which represents the efficiency of energy transfer from the fluid flow to the Pelton wheel 28.

At the next stage 106 of the sequence, the controller 38 calculates the speed ($V_n$) of the water jets applied to the Pelton wheel 28 via the spear valves 26, and the flow rate ($Q_n$) of the water out of the nozzles of the spear valves, from the measured pressure (P) and fractional openings (X1, X2) of the spear valves, using equations (2) and (3):-

$$(2) \qquad V_n = C_v \sqrt{\frac{2P}{\rho}}$$

$$(3) \qquad Q_n = \left[ a\left(X_1^2 + X_2^2\right) + b\left(X_1 + X_2\right)\right] A_1 \sqrt{\frac{2P}{\rho}}$$

The controller 38 then, in stag 108, calculates the torque ($T_I$) to be applied to the flywheel shaft to accelerate or decelerate the shaft to the ideal operating speed ($\omega_I$) shaft from the current measured speed ($\omega$ within a target time (in this example 6 seconds, about half a wave cycle) represented by a flywheel time constant ($t_\omega$), using equation (4):-

$$(4) \qquad T_I = I \frac{\omega_I - \omega}{t_\omega}$$

where I is the known inertia of the combination of the turbine apparatus (comprising the flywheel, Pelton wheel and shaft) and the generator 34. In practice, the inertia of the generator 34 is usually a small fraction of the inertia of the turbine apparatus.

Next the controller 38 calculates, at stage 110, the current torque experienced by the turbine apparatus using equation (5), based on the measured rotational speed and the value of the flow rate ($Q_n$) of the water out of the nozzles of the spear valves calculated in stage 106:-

$$(5) \qquad T_B = \frac{\rho}{2} D.Q_n \left(1 + Ze\right)\left(V_n - \frac{\omega D}{2}\right) - 0.0115 \omega^{1.4}$$

in which the last term represents rotational speed-dependent losses (including, for example, frictional losses) and is determined empirically from previous measurements, and Ze is a dimensionless parameter representative of the Pelton wheel efficiency. The calculated value $T_B$ is stored by the controller 38.

The controller 38 uses the calculated value torque value $T_B$ and previously calculated and stored instantaneous values of torque $T_B$ to calculate the average torque ($T_{AV}$) over an averaging time equal to the flywheel time constant ($t_\omega$), that in this example is equal to 6 seconds (about half a wave cycle), using equation (6):-

$$(6) \qquad T_{AV} = \frac{1}{t_\omega} \int_{-t_\omega}^{0} T_B .dt$$

The controller 38 then calculates the net reactive torque ($T_R$) required to be applied to the shaft to get the rotational speed to the ideal rotational speed $\omega_I$ in the target time of $t_\omega$ (in this case 6 seconds), using equation (7):-

$$(7) \qquad T_R = T_{AV} - T_I$$

The controller 38 also reads from memory, or calculates, a predetermined maximum torque ($T_{Max}$) that can be applied to the shaft. The maximum braking is determined by the generator power rating (GR) and the generator rated speed ($\omega_G$):

$$(8) \qquad T_{Max} = \frac{GR}{\omega_G}$$

At stage 114, the controller then commands the regenerative drive 36 to apply a braking torque via the generator 34 to the shaft of the Pelton wheel 28 and flywheel 32. The more braking torque that is applied the more output power provided by the regenerative drive 36. It the required torque exceeds the torque available then the generator 34 just applies the maximum allowed:-

$$(9) \qquad T_G = T_R \quad \text{But If} \quad T_R < -T_{Max} \quad \text{Then } T_G = -T_{Max}$$

Limitation of the applied torque to the maximum value ($T_{Max}$) can result in the shaft speed continuing to increase on a temporary basis until the water input power decreases.

In addition to continuously adjusting the torque ($T_G$) applied by the generator 34, the controller 38 also continuously controls and varies the amount of water being fed onto the Pelton wheel 28 by continually modulating the opening of the spear valves 26, and thus controls the system pressure (P).

The system pressure (P) is controlled so that the value of Ku is as far as practicable optimized, ideally at a value of 0.5, as illustrated in Figure 2, but usually at between 0.4 and 0.6 because of control limitations. That ensures that the Pelton wheel 28 operates at maximum efficiency, and may also reduce erosion of the Pelton wheel buckets and casing. As the rotational speed of the Pelton wheel 28 changes the velocity of the water jet also needs to change in proportion to maintain the same ratio between rotational and water jet speed (represented by the value of Ku). By controlling the system pressure (P) in proportion to the square of the rotational speed (w) it is possible to maintain the value of Ku to be at or near the optimal value. Therefore, the controller 38 continuously adjusts the system pressure (P) just upstream of the spear valves 26 so that it is proportional to the square of the speed of rotation of the turbine apparatus. That control of system pressure (P) is illustrated in stages 116 to 124 of the sequence of operations illustrated in Figure 4.

At stage 116 of the sequence, the controller 38 calculates the values of Ku and a target pressure, based on the measured speed (w) using equations (10) and (11):-

$$(10) \qquad Ku = \frac{\omega D}{2V_n}$$

$$(11) \qquad P_T = \frac{\rho}{8} \left( \frac{\omega D}{C_v KuNom} \right)^2$$

The target pressure is subject to maximum and minimum limits:-

$$(12) \qquad \text{IF } P_T < 2{,}500{,}000 \text{ THEN } P_T = 2{,}500{,}000 \quad \text{Apply minimum limit to } P_T$$

$$(13) \qquad \text{IF } P_T > 7{,}000{,}000 \text{ THEN } P_T = 7{,}000{,}000 \quad \text{Apply maximum limit to } P_T$$

The target pressure ($P_T$) is determined from equations (11) to (13) to be the pressure that would provide a value of KuNom of 0.5 (or between 0.4 and 0.6) for the measured, instantaneous value of speed ($\omega$).

The controller 38 is operable to control the opening of the spear valves in order to increase or decrease the pressure to attain the calculated target pressure ($P_T$) as now described in more detail.

The flow rate of water (F) flowing into the system just upstream of the accumulator 30 is continually measured by the flow meter 40, and monitored by the controller 38. If the flow rate at the spear valves 26 is exactly the same as flow of water just up stream of the accumulator 30 then there is no net flow of water in or out of the accumulator 30 so the pressure in the system remains constant. By controlling the difference between the flows into and out of the accumulator 30 it is possible to control the net flow of water in or out of the accumulator 30, and in so doing it is possible to control the pressure. To control the system pressure at a particular level the controller 38 modulates the position of the spear valve so that flow in is the same as the flow out. To alter the system pressure the controller 38 modulates the position of the spear valve so that flow in is either greater or less than the flow out.

As the mass of air in the accumulator 30, its pre-charge pressure ($P_A$) and the volume of the accumulator 30 ($V_A$) are known, the controller 38 uses the gas laws to calculate in stage 118 how much water flow ($F_A$) into or out of the accumulator would be required (disregarding the flow into the system from upstream of the accumulator) to achieve the target pressure within a further target time ($t_A$):-

$$(14) \qquad F_A = \frac{V_A P_A}{t_A} \left( \frac{1}{P_T} - \frac{1}{P} \right)$$

The controller 38 then calculates, at stage 120, the difference between the flow into or out of the accumulator ($F_A$) and the measured flow (F) into the system from upstream of the accumulator measured by the flow meter 40 to obtain a target nozzle flow rate ($F_T$), which is the flow rate through the nozzles of the spear valves to attain the target pressure within the further target time ($t_A$):-

$$(15) \qquad F_T = F + F_A$$

optionally subject to a maximum nozzle flow rate ($F_{max}$):-

$$(16) \qquad \text{IF } FT > F_{Max} \text{ THEN } FT = F_{Max}$$

By controlling the flow difference between the calculated flow ($F_A$) to or from the accumulator to attain the target system pressure ($P_T$) and the measured flow (F) into the system it is possible to control the system pressure and the rate of change of system pressure.

The controller 38 then calculates, at stage 122, the target opening ($X_T$) of the spear valves 26 needed to provide the target nozzle flow rate ($F_T$) by solving equation (3) using the standard quadratic equation solution:-

$$(17) \qquad c = \frac{-F_T}{NA_1 \sqrt{\frac{2P}{\rho}}}$$

$$(18) \qquad e = b^2 - 4ac \qquad \text{IF } e < 0 \text{ THEN } e = 0$$

$$(19) \qquad X_T = \frac{-b + \sqrt{e}}{2a}$$

subject to the requirement for a positive solution, and subject to a predetermined maximum opening for the spear valves:-

$$(20) \qquad \text{IF } X_T < 0 \text{ THEN } X_T = 0$$

$$(21) \qquad \text{IF } X_T > 0.58 \text{ THEN } X_T = 0.58$$

In equation (17), the parameter N represents the number of spear valves. If the controller 38 detects that one of the spear valves is not operational, it will reduce the value of N from two to one, which will automatically cause an increase in the calculated target opening for the remaining spear valve. In this example, the same target openings ($X_T$) is used for both spear valves. In alternative embodiments, target openings may be calculated for each spear valve individually.

The controller 38, at stage 124, transmits a control signal to the spear valves 26 to control the spear valves to open to the determined nozzle openings $X_T$.

The sequence of Figure 4 then begins again with the receipt of new measured values of flow, pressure, speed and fractional opening of the spear valves. The sequence is performed with a frequency of around 20 Hz in the described example, and thus is repeated over a much shorter timescale than the wave period expected for normal sea conditions (usually around 12 seconds). By controlling the applied torque and the spear valve openings, and monitoring the speed, pressure and flow rate over such short timescales, the system is able to provide efficient operation of the Pelton wheel, and smooth electrical power output, despite the intrinsically large variations in the wave motion input.

In practice, because of possible inaccuracies in the flow meter 40 reading and the control of the spear valves 26 it may not be possible to get a perfect match between the flows in and out. Such errors in the flow can be accommodated in the accumulator 30, which dependent on the accumulative error will result in a drift in the system pressure. The controller 38 is able to detect any drift in pressure via the pressure sensor 42and to adjust for it by introducing an offset in the flow through the spear valves 26.

It can be understood from the description above relating to Figure 4 that the torque that is applied to the turbine apparatus at any instant (which determines the speed of rotation of the turbine apparatus) depends on the value of the ideal speed of rotation ($\omega_I$) that is used, which depends in turn on the value for the ideal pressure ($P_I$) that is selected. The opening of the spear valves 26, and the pressure and flow rate, at any given instant depends in turn on the measured value of speed of rotation ($\omega$). Thus, it can be understood that the values of ideal pressure ($P_I$) or ideal speed of rotation ($\omega_I$) that are used by the controller 38 affect the efficiency, and electrical power output of the system, even though the values of pressure (P) and speed (w) at any given instant are generally not equal to the ideal pressure or ideal speed of rotation.

Indeed, at any given instant, the actual system pressure (P) can be significantly different from the ideal operating pressure ($P_I$). If there is a series of higher power waves, the Pelton wheel speed and the system pressure will tend to increase. This will then increase the hydraulic loading at the wave energy conversion device 2. It is generally the case that the larger and higher power waves will provide more power to the system when the system pressure is higher. Conversely smaller and less powerful waves provide more of their power to the system if the system pressure is lower. Therefore the system pressure (P) tends to increase when there is a series of larger waves and decreases with smaller waves, thus extracting more of the available power.

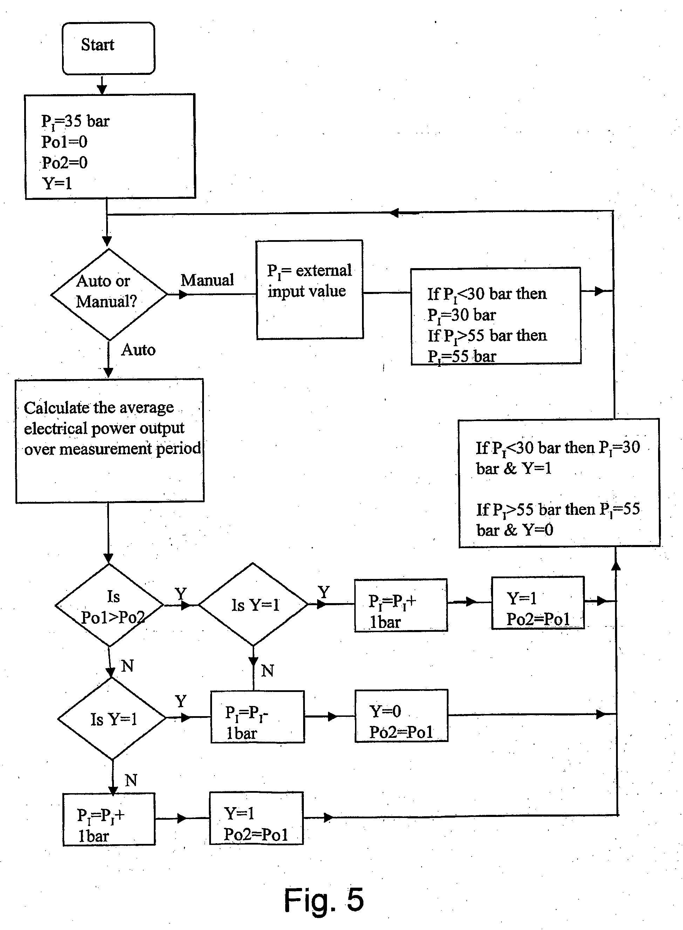

The value of ideal operating pressure ($P_I$) is set either manually or automatically. The procedure for the setting and control of the ideal operating pressure is illustrated in overview in the flow chart of Figure 5.

The procedure starts upon power up of the system, and the controller 38 sets the value of the ideal operating pressure ($P_I$) to a default value, in this example 35 bar. The controller also sets parameters $P_{o1}$ and $P_{o2}$ to initial values of zero, and sets a flag Y to an initial value of 1. The parameters $P_{o1}$ and $P_{o2}$ are used to represent the electrical power output from the system in successive measurement periods.

An operator of the system then selects whether the value of ideal operating pressure ($P_I$) is to be set manually or automatically. If the value is to be set manually, the operator enters the desired value for the ideal operating pressure ($P_I$). The value may be pre-calculated for example based on characteristics of the system and expected wave characteristics and/or previously used values. The controller 38 sets the value of ideal operating pressure ($P_I$) equal to a predetermined minimum or maximum pressure, if the entered value is less than the minimum pressure or greater than the maximum pressure. Otherwise the controller 38 uses the entered value of ideal operating pressure ($P_I$). The system then enters its operational state and begins to generate electrical power, under the control of the controller 38 in accordance with the procedure of Figure 4.

If the operator selects automatic selection of the ideal operating pressure, the system enters its operational state and begins to generate electrical power, under the control of the controller 38 in accordance with the procedure of Figure 4, using the default value of 35 bar for the ideal operating pressure ($P_I$).

The controller 38, maintains the value of the ideal operating pressure at the same value over a measurement time significantly longer than a wave period (for example 15 minutes). The controller 38 determines the electrical power output during the measurement time and sets the value of $P_{o1}$ equal to that electrical power output. The controller 38 then compares the value of the parameter $P_{o1}$ to the value of the parameter $P_{o2}$ that represents the electrical power output during the immediately preceding period, and decreases (or increases) the value of the ideal operating pressure by a predetermined increment (in this example, 1 bar) in dependence on the comparison. After the first measurement period, the value of the parameter $P_{o2}$ is zero and so the value of $P_{o1}$ is greater than the $P_{o2}$ and, the value of the ideal operating pressure is incremented by the predetermined increment, the flag Y is set equal to one and the value of $P_{o2}$ is set equal to the value of $P_{o1}$.

The controller 38 then controls operation of the system for a further measurement period of 15 minutes, using the decremented value for the ideal operating pressure ($P_I$) of 36 bar, again determines the electrical power output during the measurement time and sets the value of $P_{o1}$ equal to that electrical power output.

The controller 38 then again compares the value of electrical power output to that obtained for the immediately preceding measurement period, and again determines whether the electrical power output has increased. If the electrical power output has increased following an increase (or decrease) in the value of ideal operating pressure ($P_I$) at the end of the previous measurement period then the controller again increases (or decreases) the value of ideal operating pressure ($P_I$). If instead the electrical power output has decreased in comparison to the previous measurement period, the controller 38 instead decreases (or increases) the value of the ideal operating pressure ($P_I$). The controller 38 follows the same procedure for each subsequent measurement period. Automatic tuning of the ideal operating pressure ($P_I$) that is thus provided ensures that the value of ideal operating pressure ($P_I$) is automatically adjusted to changing wave conditions and provides the maximum electrical power output of the system.

The value of the target times or time constants, $t_\omega$ and $t_A$ used in the procedure of Figure 4 can also be used to tune the system to prevailing wave conditions and are usually set to be substantially equal to one half of the average wave period (for example 6 seconds). As described above, the controller tries to bring the flywheel speed to the ideal operating speed ($\omega_I$) in $t\omega$ seconds, and to bring the accumulator pressure to the target pressure ($P_T$) in $t_A$ seconds.

The values of $t\omega$ and $t_A$ are usually set manually by the operator and may be updated if the prevailing wave conditions change. In an alternative embodiment, the values of $t\omega$ and $t_A$ may also be set automatically using an equivalent procedure to that used for setting the value of the ideal operating pressure ($P_I$).

The value of $t_\omega$ is limited to be in the range of 1 to 60 seconds and $t_A$ is limited to be in the range 0.5 to 30 seconds, according to the preferred embodiment. The value of $t_\omega$ may be set equal to 24 seconds initially and $t_A$ may be set equal to 1 second initially, and the values may then be adjusted, either by an operator or automatically, to tune them to the prevailing wave environment. In the example described above, both $t_\omega$ and $t_A$ are set equal to 6 seconds.

Other parameters that may be adjusted by an operator via the controller interface include KuMax (the maximum desirable ratio of bucket speed to water jet speed; default value 0.5), KuNom (the nominal ratio of bucket speed to water jet speed; default value = 0.45), KuMin (the minimum desirable ratio of bucket speed to water jet speed; default value 0.4), and $F_{Max}$ (the maximum flow the spear valves are allowed to pass; default value=0.040 $m^3$/s). The values of KuMax, KuNom and KuMin are not usually changed when tuning the system, but it is possible to do so if desired.

The following parameters are preset in the controller hardware or software to have the following values in the preferred embodiment: accumulator gas Volume ($V_A$) = 1000 L; Accumulator pre charge pressure ($P_A$) = 20bar; total inertia of flywheel, Pelton wheel and generator (I) = 100kgm$^2$; the fully open area of each nozzle ($A_1$ & $A_2$) = 0.00087404 m$^2$; the nozzle coefficient of velocity ($C_v$) = 0:97; the nozzle coefficient of discharge (Cd) = 0.8; Pelton wheel pitch circle diameter (D) = 0.35m; efficiency of flow in Pelton wheel bucket (Ze) = 0.98; generator rating (GR) = 315 Kw; the generator rated speed ($\omega_G$) = 3000rpm; water density (p) = 1000kg/m3; number of operating spear valve nozzles (N) = 2.

In addition to the operating procedures described in relation to Figures 3 to 5, the controller also provides an override loop that continuously monitors the system pressure (P), the speed of rotation (w) and the value of Ku and provides for an override of the procedures of Figure 3 to 5.

There are two dump valves (not shown) that can be opened to shut the system down. In the event of failure or loss of power, these valves default to open and are held closed by the controller 38 when the system is in operation. There are also hardwired emergency stop buttons that may be used in response to a system failure or manual override. The emergency stop buttons open the dump valves and cause the drives to go to full load to stop the system quickly. For safety reasons there are two dump valves, and opening either of the valves causes the system to shutdown.

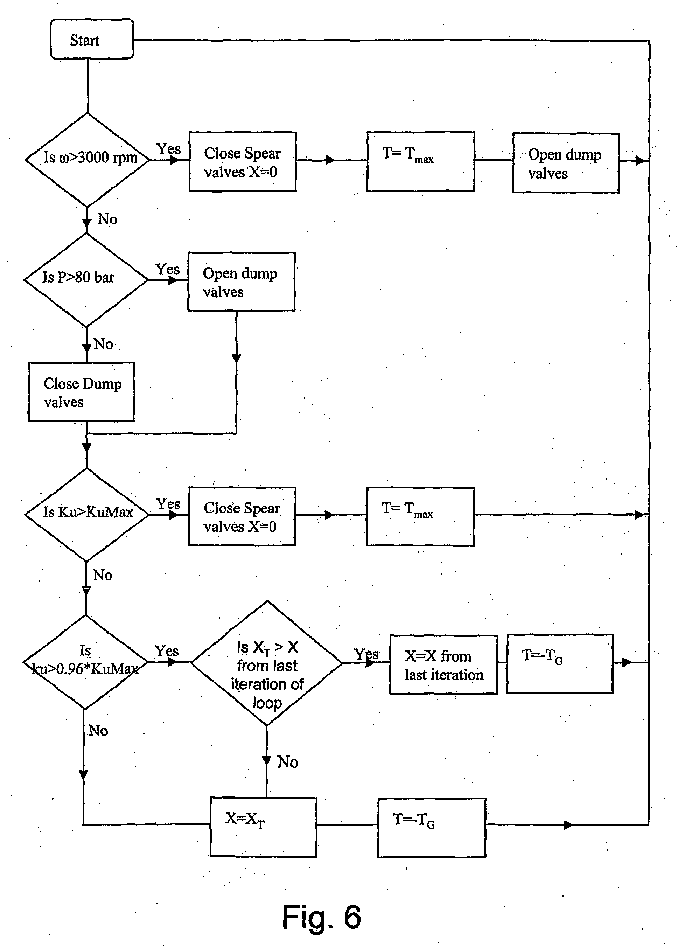

The override loop implemented by the system is illustrated in Figure 6. It can be seen from Figure 6 that if the speed ($\omega$) exceeds a predetermined maximum (in this example, 3000rpm), the controller 38 closes the spear valves 26 and opens the dump valves. Similarly, if the pressure (P) exceeds a predetermined maximum (in this example, 80 bar) the controller 38 opens the dump valves. If the value of Ku is greater than the value of $Ku_{Max}$ then the controller 38 closes the spear valves 26 and sets the torque signal (T) to be equal to $T_{max}$. If the value Ku is greater than 96% of the value of $Ku_{Max}$ then the controller 38 sets the spear valve nozzle opening signal (X) to be equal either to the target nozzle opening ($X_T$) or to the value of the spear valve nozzle opening signal from the last iteration of the procedure of Figure 4, and sets the torque signal (T) to be equal to the required generator torque ($T_G$).

In the embodiments described above, the controller 38 continuously controls both the pressure and the speed of rotation of the turbine apparatus. In alternative embodiments or modes of operation, the controller 38 can be configured to control only one of the pressure and speed of rotation.

In the embodiments described above, the control of the system is based upon a selected value of ideal operating pressure (which is used to calculate, in turn, an ideal operating speed). In alternative embodiments, an ideal operating speed, flow rate or torque can be used instead of ideal operating pressure as the basis for controlling operation of the system, in which case equations (1) to (21) are adjusted accordingly.

In the embodiments described above, the controller 38 controls pressure and speed. Pressure and speed are linked to flow rate and torque respectively, and the controller 38 may be configured to control flow rate and torque as well as or instead of pressure and speed, in which case equations (1) to (21) may be adjusted accordingly.

It is a feature of the system of Figures 1 to 6 that the turbine apparatus comprises a Pelton wheel, and the control procedures used by the controller 38 provide for efficient and controlled operation of the Pelton wheel despite the strongly oscillating input provided by the wave motion. It has been found that the Pelton wheel provides for particularly efficient extraction of electrical power when used in conjunction with the control procedures. Nevertheless, other types of turbine may be used in place of the Pelton wheel.

A summary of the various parameters that have been used in equations (1) to (21) in the embodiment of Figures 3 to 6 for one wave environment is provided in the following table:-

| | SI units | Value |
|---|---|---|
| a | | -0.39321 |
| AT = Target nozzle area | $m^2$ | Calculated value |
| $A_1 = A_2$ = Fully Open Area of Nozzle 1 or Nozzle 2 | $m^2$ | 0.00101788 |
| b | | 1.032346 |
| c | | Calculated value |
| $C_v$ = Coefficient of Nozzle Velocity | Dimensionless number | 0.97 |
| $C_d$ = Coefficient of Nozzle Discharge | Dimensionless number | Not used |
| D = Pelton Wheel PCD | M | 0.35 |
| e | | Calculated value |
| F = Flow Rate | $m^3/s$ | Meter reading Range 0-0.3 |
| Fa = Flow out of accumulator | $m^3/s$ | Calculated value |
| $F_{Max}$ | $m^3/s$ | 0.000-1.000 initially 0.040 |
| $F_T$ = Target nozzle flow | $m^3/s$ | Calculated value |
| GR = Generator rating | watts (W) | 315,000 |
| I = Total inertia of turbine apparatus and generator | $Kgm^2$ | 103.1 |
| Ku = rotational speed to jet speed ratio | Dimensionless number | Calculated value |
| KuMax = Max rotational speed to jet speed ratio | Dimensionless number | 0.5 |
| KuMin = Mix rotational speed to jet speed ratio | Dimensionless number | 0.4 |
| KuNom = Nominal rotational speed to jet speed ratio | Dimensionless number | 0.45 |
| N = Number of operating Nozzles | Dimensionless number | 1 or 2 Default value 2 |
| $\rho$ = Water Density | $Kg/m^3$ | 1,000 |
| P = Gauge Pressure | $N/m^2$ | Meter reading Range 0-10,000,000 |
| $P_A$ = Accumulator Pre Charge Pressure | $N/m^2$ | 2,000,000 |
| $P_I$ = Ideal Operating Pressure | $N/m^2$ | Calculated value |
| $P_T$ = Target Pressure | $N/m^2$ | Calculated value |
| Po1=Averaqe output power 1 | Watts | Range 0-315000 |
| Po2=Average output power 2 | Watts | Range 0-315000 |
| Qn = Nozzle flow rate | $m^3/s$ | Calculated value |

(continued)

| | SI units | Value |
|---|---|---|
| $t_\omega$ = Flywheel Time Constant | S | 1-60 initially 6 |
| $t_A$ = Accumulator Time Constant | S | 0.5-30 initially 1 |
| T = PLC torque signal sent to drive | Nm | Calculated value. This is negative for power generation |
| $T_{AV}$=Average torque applied by buckets | Nm | Calculated value |
| $T_I$ = Ideal torque | Nm | Calculated value |
| $T_B$ = Torque applied by buckets | Nm | Calculated value |
| $T_G$ = Generator torque required | Nm | Calculated value |
| $T_R$ = Net reactive torque | Nm | Calculated value |
| $T_{max}$ = Maximum torque | Nm | Calculated value |
| $V_A$ = Accumulator Gas Volume | $m^3$ | 1 |
| $V_n$ = Velocity of water jets | m/s | Calculated value |
| w = Measured rotational speed | rad/s | Meter reading Range 0-500 |
| $\omega_I$ = Ideal rotational speed | rad/s | Calculated value |
| $\omega_G$ = Generator rated speed | rad/s | 314.159 |
| X = PLC nozzle opening signal sent to actuator | Dimensionless number 0-closed 1-fully open | Calculated value |
| $X_T$ = Target nozzle opening | Dimensionless number 0-closed 1-fully open | Calculated value |
| $X_1$ = Spear valve SV1 position feedback | Dimensionless number 0-closed 1-fully open | Meter reading Range 0-1 |
| $X_2$ = Spear valve SV2 position feedback | Dimensionless number O-Closed 1-fully open | Meter reading Range 0-1 |
| Y=Logic Flag | Dimensionless, number | 0 or 1 |
| Ze = Pelton Wheel Bucket Efficiency | Dimensionless number | 0.98 |

Different values for the parameters may be used in alternative embodiments, or for alternative wave environments.

In the embodiment described above in relation to Figure 1, a single wave energy conversion device 2 is connected to the turbine apparatus via a single fluid transfer conduit 24. In alternative embodiments, a plurality of wave energy conversion devices are connected to the turbine apparatus, each connected via a respective fluid transfer conduit. Thus, the system can be scaled up to provide higher power output from the turbine apparatus and generator. By providing a plurality of wave energy conversion devices connected to the turbine apparatus in parallel, pressure surges experienced by the turbine can be reduced or smoothed, due to phase differences between the wave energy conversion devices, in operation. The fluid transfer conduits may be combined to form a single fluid transfer conduit upstream of the spear valve or valves.

The embodiments described above include spear valves, but any suitable variable opening valve could be used. Although the use of a Pelton wheel can be advantageous, any suitable turbine could be used.

Whilst the embodiments described herein implement certain functionality (for example, functionality of the controller) by means of software, that functionality could equally be implemented solely in hardware (for example by means of one or more ASICs (application specific integrated circuit)) or by a mix of hardware and software. As such, the scope of the present invention should not be interpreted as being limited only to being implemented in software or only to being implemented in hardware.

Embodiments of the invention, or at least particular features of such embodiments, can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

It will be understood that the present invention has been described above purely by way of example, and modifications of detail can be made within the scope of the invention.

**Claims**

1. A wave power capture system, comprising:-

   a fluid transfer conduit (24) for connection to a wave energy conversion device (2) such that, in operation, the wave energy conversion device (2) pressurises fluid in the fluid transfer conduit (24) in response to wave motion;
   a turbine apparatus (28) arranged to receive fluid from the fluid transfer conduit (24);
   at least one sensor (40, 42) for sensing at least one of pressure and flow rate of the fluid;
   at least one sensor for determining at least one of speed of rotation and torque of the turbine apparatus (28);
   a variable opening valve (26) for controlling the rate of flow of fluid from the fluid transfer conduit (24) to the turbine apparatus (28);
   a controller (38); and
   an electrical power generation system (34, 36) comprising a variable torque electrical generator (34) for obtaining electrical power from operation of the turbine apparatus (28),
   wherein the controller (38) is configured to control operation of the variable opening valve and to control torque applied by the variable torque electrical generator (34) in dependence upon the pressure or flow rate of the fluid sensed by the sensor (40, 42) and the determined speed of rotation or torque, and
   the controller (38) is configured to continuously vary opening of the variable opening valve (26) and continuously vary torque applied by the variable torque electrical generator (34) during a wave cycle thereby to substantially maintain a desired ratio of the speed of rotation of the turbine apparatus (28) to the speed of fluid applied to the turbine apparatus (28) during the wave Cycle.

2. A system according to Claim 1, further comprising potential energy storage means (30) located between the wave energy conversion device (2) and the variable opening valve (26), optionally wherein the potential energy storage means comprises an accumulator (30).

3. A system according to Claim 1 or 2, wherein the turbine apparatus (28) comprises an impulse turbine, optionally a Pelton wheel (28).

4. A system according to any preceding claim, wherein the controller (38) is configured to control operation of the variable opening valve (26) in dependence on at least one of:-

   a difference between an actual pressure and a target pressure; and
   a difference between an actual flow rate and a target flow rate,
   and optionally wherein the controller (38) is configured to monitor the difference between at least one of:-
   the actual pressure and the target pressure; and
   the difference between the actual flow rate and the target flow rate,
   during each wave cycle and to control operation of the variable opening valve (26) in dependence on the difference so as to vary at least one of the actual pressure and the actual flow rate during each wave cycle.

5. A system according to Claim 4, wherein the controller (38) is configured to control operation of the variable opening valve (26) in dependence on a predetermined time constant, representative of a target time for reducing the difference between at least one of:- the actual pressure and the target pressure; the actual flow rate and the target flow rate, and optionally the value of at least one of the target pressure and flow rate is substantially equal to a respective value that provides one of a maximum efficiency and a maximum power output of the system.

6. A system according to any preceding claim, wherein the controller (38) is configured to control the torque applied to the turbine apparatus (28) in dependence on at least one of:- a difference between an actual torque and a target torque; a difference between an actual speed and a target speed.

7. A system according to Claim 6, wherein the controller (38) is configured to control the torque applied to the turbine apparatus (28) in dependence on a further predetermined time constant, representative of a target time for reducing at least one of:- the difference between the actual torque and the target torque; the difference between the actual speed and the target speed.

8. A system according to of Claims 5 to 7, wherein at least one of the target pressure, target flow rate, target torque or target speed is determined in dependence on the value of at least one of:- an ideal operating pressure and an ideal operating speed, and optionally the controller (38) is configured to select at least one of:- the value of the ideal operating pressure and the value of the ideal operating speed in dependence on the electrical power output obtained from the system.

9. A system according to Claim 8, wherein the controller (38) is configured to determine the electrical power output provided by the system when controlled according to at least two different values of the ideal operating pressure or ideal operating speed to compare the electrical power output obtained for the at least two different values of the ideal operating pressure or ideal operating speed, and to select a value for the ideal operating pressure or ideal operating speed in dependence on the comparison.

10. A system according to Claim 8 or 9, wherein the controller (38) is configured to use a selected value of at least one of ideal operating pressure and ideal operating speed during a measurement time, so as to determine electrical power output during the measurement time, then to compare the determined electrical power output with the electrical power output obtained using at least one other value of said at least one of ideal operating pressure and ideal operating speed during at least one previous measurement time, and to select a value for said at least one of ideal operating pressure and ideal operating speed for use in a subsequent measurement time in dependence on the comparison, wherein the measurement time is longer than a wave period.

11. A system according to any preceding claim, wherein the controller (38) is configured to control operation of the variable flow rate valve (26) and/or the applied torque in dependence on a model that represents operation of the turbine apparatus (28), and
optionally:-
the model comprises or is representative of the equation,

$$\omega = \frac{2C_V KuNom}{D} \sqrt{\frac{2P}{\rho}}$$

where $\omega$) is measured rotational speed, $C_V$ is a coefficient of nozzle velocity, *KuNom* is nominal rotational speed to jet speed ratio, *D* is a Pelton wheel pitch circle diameter, *P* is gauge pressure, and $\rho$ is fluid density, and optionally the controller (38) is configured to control operation of the system to provide a value of Ku within the range 0.4 to 0.6.

12. A system according to any preceding claim, comprising a plurality of fluid transfer conduits (24), each for connection to a respective wave energy conversion device (2) such that, in operation, each wave energy conversion device (2) pressurises fluid in a corresponding one of the fluid transfer conduits (24) in response to wave motion, wherein the turbine apparatus (28) is arranged to receive fluid from each of the fluid transfer conduits (24), and the system further comprises a plurality of variable opening valves (26), each variable flow rate valve (26) arranged to control the rate of flow of fluid from a respective one of the fluid transfer conduits (24) to the turbine apparatus (28).

13. A method of controlling operation of a wave power capture system, comprising:-

receiving signals from at least one sensor (40, 42) for determining at least one of pressure and flow rate of a fluid that is pressurised in a fluid transfer conduit (24) by a wave energy conversion device (2) in response to wave motion;
receiving signals from at least one sensor for determining at least one of the speed of rotation and torque of a turbine apparatus (28) arranged to received fluid from the fluid transfer conduit (24);
controlling operation of a variable opening valve (26) for controlling the rate of flow of fluid from the fluid transfer conduit (24) to the turbine apparatus (28) and controlling torque applied by the variable torque electrical generator (34), in dependence upon the pressure or flow rate of the fluid sensed by the sensor (40, 42) and the determined speed of rotation or torque, wherein
the control of operation of the variable opening valve (26) and the control of torque applied by the variable torque electrical generator (34) comprises continuously varying opening of the variable opening valve (26) and continuously varying torque applied by the variable torque electrical generator (34) during a wave cycle thereby to substantially maintain a desired ratio of the speed of rotation of the turbine apparatus (28) to the speed of fluid applied to the turbine apparatus (28) during the wave cycle.

**14.** A computer program product comprising computer readable instructions that are executable to perform a method according to Claim 13.

**Patentansprüche**

**1.** Wellenenergieerfassungssystem, das aufweist:

eine Fluidübertragungsleitung (24) für eine Verbindung mit einer Umwandlungsvorrichtung (2) für Wellenenergie, so dass beim Betrieb die Umwandlungsvorrichtung (2) für Wellenenergie das Fluid in der Fluidübertragungsleitung (24) als Reaktion auf die Wellenbewegung unter Druck setzt;
eine Turbinenvorrichtung (28), die angeordnet ist, um Fluid aus der Fluidübertragungsleitung (24) aufzunehmen;
mindestens einen Sensor (40, 42) für das Messen von mindestens einem von Druck und Strömungsgeschwindigkeit des Fluids;
mindestens einen Sensor für das Ermitteln von mindestens einem von Drehzahl und Drehmoment der Turbinenvornchtung (28);
ein sich regelbar öffnendes Ventil (26) für das Steuern der Strömungsgeschwindigkeit des Fluid aus der Fluidübertragungsleitung (24) zur Turbinenvornchtung (28);
einen Regler (38); und
ein System (34, 36) zur Erzeugung der elektrischen Leistung, das einen elektrischen Generator (34) mit veränderlichem Drehmoment für das Erhalten einer elektrischen Leistung durch den Betrieb der Turbinenvorrichtung (28) aufweist,
wobei der Regler (38) ausgebildet ist, um die Funktion des sich regelbar öffnenden Ventils zu steuern, und um das Drehmoment zu steuern, das vom elektrischen Generator (34) mit veränderlichem Drehmoment in Abhängigkeit vom Druck oder der Strömungsgeschwindigkeit des Fluids, die vom Sensor (40, 42) gemessen werden, und der ermittelten Drehzahl oder dem Drehmoment angewandt wird, und
wobei der Regler (38) ausgebildet ist, um das Öffnen des sich regelbar öffnenden Ventils (26) kontinuierlich zu verändern, und um das Drehmoment kontinuierlich zu verändern, das vom elektrischen Generator (34) mit veränderlichem Drehmoment während eines Wellenzyklus angewandt wird, um dadurch im Wesentlichen ein gewünschtes Verhältnis der Drehzahl der Turbinenvornchtung (28) zur Geschwindigkeit des Fluids aufrecht zu erhalten, das bei der Turbinenvorrichtung (28) während des Wellenzyklus angewandt wird.

**2.** System nach Anspruch 1, das außerdem ein Speichermittel für potentielle Energie (30) aufweist, das zwischen der Umwandlungsvorrichtung (2) für Wellenenergie und dem sich regelbar öffnenden Ventil (26) angeordnet wird, wobei wahlweise das Speichermittel für potentielle Energie einen Akkumulator (30) aufweist.

**3.** System nach Anspruch 1 oder 2, bei dem die Turbinenvorrichtung (28) eine Gleichdruckturbine aufweist, wahlweise ein Pelton-Rad (28).

**4.** System nach einem der vorhergehenden Ansprüche, bei dem der Regler (38) ausgebildet ist, um die Funktion des sich regelbar öffnenden Ventils (26) in Abhängigkeit von mindestens einer der folgenden zu steuern:

eine Differenz zwischen einem Istdruck und einem Solldruck; und
eine Differenz zwischen einer Istströmungsgeschwindigkeit und einer Sollströmungsgeschwindigkeit,
und wobei der Regler (38) wahlfrei ausgebildet ist, um die Differenz zwischen mindestens einem der folgenden zu überwachen:

dem Istdruck und dem Solldruck; und
die Differenz zwischen der Istströmungsgeschwindigkeit und der Sollströmungsgeschwindigkeit,
während eines jeden Wellenzyklus, und um die Funktion des sich regelbar öffnenden Ventils (26) in Abhängigkeit von der Differenz zu steuern, um so mindestens einen von Istdruck und Istströmungsgeschwindigkeit während eines jeden Wellenzyklus zu verändern.

5. System nach Anspruch 4, bei dem der Regler (38) ausgebildet ist, um die Funktion des sich regelbar öffnenden Ventils (26) in Abhängigkeit von einer vorgegebenen Zeitkonstante zu steuern, die für eine Sollzeit für das Verringern der Differenz zwischen mindestens einem der folgenden charakteristisch ist: dem Istdruck und dem Solldruck, der Istströmungsgeschwindigkeit und der Sollströmungsgeschwindigkeit, und
wobei wahlweise der Wert von mindestens einem von Solldruck und Strömungsgeschwindigkeit im Wesentlichen einem entsprechenden Wert gleich ist, der eine von einer maximalen Nutzleistung und einer maximalen Ausgangsleistung des Systems liefert.

6. System nach einem der vorhergehenden Ansprüche, bei dem der Regler (38) ausgebildet ist, um das an die Turbinenvorrichtung (28) angewandte Drehmoment in Abhängigkeit von mindestens einer der folgenden zu steuern: eine Differenz zwischen einem Istdrehmoment und einem Solldrehmoment; eine Differenz zwischen einer Istdrehzahl und einer Solldrehzahl.

7. System nach Anspruch 6, bei dem der Regler (38) ausgebildet ist, um das an die Turbinenvornchtung (28) angewandte Drehmoment in Abhängigkeit von einer weiteren vorgegebenen Zeitkonstante zu steuern, die für eine Sollzeit für das Verringern von mindestens einer der folgenden charakteristisch ist: der Differenz zwischen dem Istdrehmoment und dem Solldrehmoment; der Differenz zwischen der Istdrehzahl und der Solldrehzahl.

8. System nach Anspruch 5 bis 7, bei dem mindestens eines von Solldruck, Sollströmungsgeschwindigkeit, Solldrehmoment oder Solldrehzahl in Abhängigkeit vom Wert von mindestens einem der folgenden ermittelt wird: einem idealen Betriebsdruck und einer idealen Betriebsdrehzahl, und wobei der Regler (38) wahlweise ausgebildet ist, um mindestens einen der folgenden auszuwählen: den Wert des idealen Betriebsdruckes und den Wert der idealen Betriebsdrehzahl in Abhängigkeit von der elektrischen Ausgangsleistung, die vom System erhalten wird.

9. System nach Anspruch 8, bei dem der Regler (38) ausgebildet ist, um die elektrische Ausgangsleistung zu ermitteln, die vom System gebracht wird, wenn entsprechend mindestens zwei unterschiedlichen Werten des idealen Betriebsdruckes oder der idealen Betriebsdrehzahl gesteuert wird, um die elektrische Ausgangsleistung zu vergleichen, die für die mindestens zwei verschiedenen Werte des idealen Betriebsdruckes oder der idealen Betriebsdrehzahl erhalten wird, und um einen Wert für den idealen Betriebsdruck oder die ideale Betriebsdrehzahl in Abhängigkeit vom Vergleich auszuwählen.

10. System nach Anspruch 8 oder 9, bei dem der Regler (38) ausgebildet ist, um einen ausgewählten Wert von mindestens einem von idealem Betriebsdruck und idealer Betriebsdrehzahl während einer Messzeit zu verwenden, um so die elektrische Ausgangsleistung während der Messzeit zu ermitteln, dann die ermittelte elektrische Ausgangsleistung mit der elektrischen Ausgangsleistung zu vergleichen, die bei Verwendung von mindestens einem anderen Wert von mindestens einem von idealem Betriebsdruck und idealer Betriebsdrehzahl während mindestens einer vorhergehenden Messzeit erhalten wird, und einen Wert für das mindestens eine von idealem Betriebsdruck und idealer Betriebsdrehzahl für eine Verwendung bei einer nachfolgenden Messzeit in Abhängigkeit vom Vergleich auszuwählen, wobei die Messzeit länger ist als eine Wellenperiode.

11. System nach einem der vorhergehenden Ansprüche, bei dem der Regler (38) ausgebildet ist, um die Funktion des regelbaren Durchflussventils (26) und/oder das angewandte Drehmoment in Abhängigkeit von einem Modell zu steuern, das die Funktion der Turbinenvorrichtung (28) verkörpert, und
wobei wahlweise das Modell die Gleichung

$$\omega = \frac{2C_v KuNom}{D}\sqrt{\frac{2P}{\rho}}$$

aufweist oder charakteristisch dafür ist, worin sind: $\omega$ die gemessene Drehzahl, $C_v$ ein Koeffizient der Düsengeschwindigkeit, *KuNom* ein Nenndrehzahl-zu-Strahlgeschwindigkeit-Verhältnis, D ein Teilkreisdurchmesser des Pelton-Rades, P ein Messdruck und $\rho$ eine Fluiddichte, und wobei der Regler (38) wahlweise ausgebildet ist, um die Funktion des Systems zu steuern, um einen Wert von Ku innerhalb des Bereiches von 0,4 bis 0,6 zu liefern.

12. System nach einem der vorhergehenden Ansprüche, das eine Vielzahl von Fluidübertragungsleitungen (24) aufweist, eine jede für eine Verbindung mit einer entsprechenden Umwandlungsvorrichtung (2) für Wellenenergie, so dass beim Betrieb jede Umwandlungsvorrichtung (2) für Wellenenergie das Fluid in einer entsprechenden der Fluidübertragungsleitungen (24) als Reaktion auf eine Wellenbewegung unter Druck setzt, wobei die Turbinenvornrchtung (28) angeordnet ist, um das Fluid von einer jeden der Fluidübertragungsleitungen (24) aufzunehmen, und wobei das System außerdem eine Vielzahl von sich regelbar öffnenden Ventilen (26) aufweist, wobei ein jedes regelbares Durchflussventil (26) angeordnet ist, um die Strömungsgeschwindigkeit des Fluids von einer entsprechenden der Fluidübertragungsleitungen (24) zur Turbinenvorrichtung (28) zu steuern.

13. Verfahren zum Steuern des Betriebes eines Wellenenergieerfassungssystems, das die folgenden Schritte aufweist:

Empfangen von Signalen von mindestens einem Sensor (40, 42) für das Ermitteln von mindestens einem von Druck und Strömungsgeschwindigkeit eines Fluids, das in einer Fluidübertragungsleitung (24) mittels einer Umwandlungsvorrichtung (2) für Wellenenergie als Reaktion auf eine Wellenbewegung unter Druck gesetzt wird; Empfangen von Signalen von mindestens einem Sensor für das Ermitteln von mindestens einem von Drehzahl und Drehmoment einer Turbinenvorrichtung (28), die angeordnet ist, um Fluid von der Fluidübertragungsleitung (24) aufzunehmen; Steuern der Funktion eines sich regelbar öffnenden Ventils (26) für das Steuern der Strömungsgeschwindigkeit des Fluids von der Fluidübertragungsleitung (24) zur Turbinenvornchtung (28) und Steuern des Drehmomentes, das vom elektrischen Generator (34) mit veränderlichem Drehmoment angewandt wird, in Abhängigkeit vom Druck oder der Strömungsgeschwindigkeit des vom Sensor (40, 42) gemessenen Fluids und der ermittelten Drehzahl oder Drehmoment, wobei die Steuerung der Funktion des sich regelbar öffnenden Ventils (26) und die Steuerung des vom elektrischen Generator (34) mit veränderlichem Drehmoment angewandten Drehmomentes weist das sich kontinuierlich verändernde Öffnen des sich regelbar öffnenden Ventils (26) und das kontinuierliche Verändern des Drehmomentes auf, das vom elektrischen Generator (34) mit veränderlichem Drehmoment während eines Wellenzyklus angewandt wird, um dadurch im Wesentlichen ein gewünschtes Verhältnis der Drehzahl der Turbinenvorrichtung (28) zur Geschwindigkeit des Fluids aufrecht zu erhalten, das an der Turbinenvorrichtung (28) während des Wellenzyklus angewandt wird.

14. Computerprogrammprodukt, das computerlesbare Befehle aufweist, die ausführbar sind, um ein Verfahren nach Anspruch 13 durchzuführen.

## Revendications

1. Système de captage de l'énergie des vagues, comprenant :

un conduit de transfert de fluide (24) destiné à être connecté à un dispositif de conversion de l'énergie des vagues (2), de sorte qu'en service, le dispositif de conversion de l'énergie des vagues (2) met sous pression le fluide dans le conduit de transfert du fluide (24) en réponse au mouvement des vagues ; un appareil de turbine (28), destiné à recevoir le fluide du conduit de transfert du fluide (24) ; au moins un capteur (40, 42) pour détecter au moins une caractéristique, à savoir la pression ou le débit du fluide ; au moins un capteur pour déterminer au moins une caractéristique, à savoir la vitesse de rotation ou le couple de l'appareil de turbine (28) ; une soupape à ouverture variable (26) pour contrôler le débit d'écoulement du fluide du conduit de transfert du fluide (24) vers l'appareil de turbine (28) ; un dispositif de commande (38) ; et un système de génération d'énergie électrique (34, 36), comprenant un générateur électrique à couple variable (34) pour obtenir de l'énergie électrique sur la base du fonctionnement de l'appareil de turbine (28) ; dans lequel le dispositif de commande (38) est destiné à contrôler le fonctionnement de la soupape à ouverture variable et à contrôler le couple appliqué par le générateur électrique à couple variable (34), en fonction de la pression ou du débit du fluide détecté(e) par le capteur (40, 42), et de la vitesse de rotation déterminée ou du couple ; et le dispositif de commande (38) est destiné à changer en continu l'ouverture de la soupape à ouverture variable (26) et à changer en continu le couple appliqué par le générateur électrique à couple variable (34) au cours d'un cycle de vagues, pour maintenir ainsi pour l'essentiel un rapport voulu entre la vitesse de rotation de l'appareil de turbine (28) et la vitesse du fluide appliqué à l'appareil de turbine (28) au cours d'un cycle de vagues.

**2.** Système selon la revendication 1, comprenant en outre un moyen de stockage de l'énergie potentielle (30), agencé entre le dispositif de conversion de l'énergie des vagues (2) et la soupape à ouverture variable (26), dans lequel le moyen de stockage de l'énergie potentielle comprend optionnellement un accumulateur (30).

**3.** Système selon les revendications 1 ou 2, dans lequel l'appareil de turbine (28) comprend une turbine à action, optionnellement une roue Pelton.

**4.** Système selon l'une quelconque des revendications précédentes, dans lequel le dispositif de commande (38) est destiné à contrôler le fonctionnement de la soupape à ouverture variable (26) en fonction d'au moins une des caractéristiques ci-dessus :

une différence entre une pression effective et une pression cible ; et
une différence entre le débit effectif et le débit cible ;
et dans lequel le dispositif de commande (38) est optionnellement destiné à surveiller la différence entre au moins une des caractéristiques ci-dessous :

la pression effective et la pression cible ; et
la différence entre le débit effectif et le débit cible,
au cours de chaque cycle de vagues, et à contrôler le fonctionnement de la soupape à ouverture variable (26) en fonction de la différence, de sorte à changer au moins une caractéristique, à savoir la pression effective ou le débit effectif au cours de chaque cycle de vagues.

**5.** Système selon la revendication 4, dans lequel le dispositif de commande (38) est destiné à contrôler le fonctionnement de la soupape à ouverture variable (26) en fonction d'une constante de temps prédéterminée représentative d'un temps cible pour réduire la différence entre au moins une des caractéristiques ci-dessous : la pression effective et la pression cible ; le débit effectif et le débit cible ; et
optionnellement
dans lequel la valeur d'au moins une caractéristique, à savoir la pression cible ou le débit, est pour l'essentiel égale à une valeur respective établissant une caractéristique, à savoir une efficacité maximale ou une puissance de sortie maximale du système.

**6.** Système selon l'une quelconque des revendications précédentes, dans lequel le dispositif de commande (38) est destiné à contrôler le couple appliqué à l'appareil de turbine (28) en fonction d'au moins une des caractéristiques ci-dessous : une différence entre un couple effectif et un couple cible ; une différence entre une vitesse effective et une vitesse cible.

**7.** Système selon la revendication 6, dans lequel le dispositif de commande (38) est destiné à contrôler le couple appliqué à l'appareil de turbine (28) en fonction d'une constante de temps prédéterminée additionnelle représentative d'un temps cible pour réduire au moins une des caractéristiques ci-dessous : la différence entre le couple effectif et le couple cible ; la différence entre la vitesse effective et la vitesse cible.

**8.** Système selon les revendications 5 à 7, dans lequel au moins une caractéristique, à savoir la pression cible, le débit cible, le couple cible ou la vitesse cible, est déterminée en fonction de la valeur d'au moins une des caractéristiques ci-dessous : une pression opérationnelle idéale et une vitesse opérationnelle idéale, le dispositif de commande (38) étant optionnellement destiné à sélectionner au moins une des caractéristiques ci-dessous : la valeur de la pression opérationnelle idéale et la valeur de la vitesse opérationnelle idéale, en fonction de la puissance de sortie électrique obtenue du système.

**9.** Système selon la revendication 8, dans lequel le dispositif de commande (38) est destiné à déterminer la puissance de sortie électrique du système en cas d'une commande selon au moins deux valeurs différentes de la pression opérationnelle idéale ou de la vitesse opérationnelle idéale, pour comparer la puissance de sortie électrique obtenue pour les au moins deux valeurs différentes de la pression opérationnelle idéale ou de la vitesse opérationnelle idéale, et pour sélectionner une valeur pour la pression opérationnelle idéale ou la vitesse opérationnelle idéale en fonction de la comparaison.

**10.** Système selon les revendications 8 ou 9, dans lequel le dispositif de commande (38) est destiné à utiliser une valeur sélectionnée d'au moins une caractéristique, à savoir la pression opérationnelle idéale ou la vitesse opérationnelle idéale, au cours d'un temps de mesure, de sorte à déterminer la puissance de sortie électrique au cours du temps de mesure, et de comparer ensuite la puissance de sortie électrique avec la puissance de sortie électrique obtenue en utilisant au moins une autre valeur de ladite au moins une caractéristique, à savoir la pression opérationnelle idéale ou la vitesse opérationnelle idéale au cours d'au moins un temps de mesure précédent, et de sélectionner une valeur pour ladite au moins une caractéristique, à savoir la pression opérationnelle idéale ou la vitesse opérationnelle idéale en vue d'une utilisation lors d'un temps de mesure ultérieur, en fonction de la comparaison, le temps de mesure étant plus long qu'une période de vagues.

11. Système selon l'une quelconque des revendications précédentes, dans lequel le dispositif de commande (38) est destiné à contrôler le fonctionnement de la soupape à débit variable (26) et/ou du couple appliqué en fonction d'un modèle représentant le fonctionnement de l'appareil de turbine (28), et optionnellement :

le modèle comprend ou est représentatif de l'équation

$$\omega = \frac{2C_v KuNom}{D} \sqrt{\frac{2P}{\rho}}$$

où ω représente la vitesse de rotation mesurée, $C_v$ représentant un coefficient de la vitesse de la buse, *KuNom* représentant un rapport entre la vitesse de rotation nominale et la vitesse de jet, D représentant un diamètre du cercle primitif de la roue de Pelton, P représentant une pression manométrique, et ρ représentant une densité du fluide, le dispositif de commande (38) étant optionnellement destiné à contrôler le fonctionnement du système pour fournir une valeur de Ku comprise dans l'intervalle allant de 0,4 à 0,6.

12. Système selon l'une quelconque des revendications précédentes, comprenant plusieurs conduits de transfert de fluide (24), destiné chacun à être connecté à un dispositif de conversion de l'énergie des vagues respectif (2), de sorte qu'en service chaque dispositif de conversion de l'énergie des vagues (2) met sous pression le fluide dans un conduit correspondant des conduits de transfert de fluide (24) en réponse au mouvement des vagues, dans lequel l'appareil de turbine (28) est destiné à recevoir le fluide de chacun des conduits de transfert de fluide (24), le système comprenant en outre plusieurs soupapes à ouverture variable (26), chaque soupape à débit variable (26) étant destinée à contrôler le débit du fluide d'un conduit respectif des conduits de transfert du fluide (24) vers l'appareil de turbine (28).

13. Procédé de commande du fonctionnement d'un système de captage de l'énergie des vagues, comprenant les étapes ci-dessous :

réception de signaux d'au moins un capteur (40, 42), pour déterminer au moins une caractéristique, à savoir la pression ou le débit d'un fluide mis sous pression dans un conduit de transfert du fluide (24) par un dispositif de conversion de l'énergie des vagues (2) en réponse au mouvement des vagues ;
réception de signaux d'au moins un capteur, pour déterminer au moins une caractéristique, à savoir la vitesse de rotation ou le couple, d'un appareil de turbine (28) destiné à recevoir le fluide du conduit de transfert du fluide (24) ;
commande du fonctionnement d'une soupape à ouverture variable (26) pour contrôler le débit d'écoulement du fluide du conduit de transfert du fluide (24) vers l'appareil de turbine (28), et contrôler le couple appliqué par le générateur d'électricité à couple variable (34), sur la base de la pression ou du débit détecté(e) par le capteur (40, 42), et de la vitesse de rotation ou du couple déterminé(e) ; dans lequel
la commande du fonctionnement de la soupape à ouverture variable (26) et la commande du couple appliqué par le générateur d'électricité à couple variable (34) comprenant le changement continu de l'ouverture de la soupape à ouverture variable (26) et de changement en continu du couple appliqué par la générateur d'électricité à couple variable (34) au cours d'un cycle de vagues, pour maintenir ainsi pour l'essentiel un rapport voulu entre la vitesse de rotation de l'appareil de turbine (28) et la vitesse du fluide appliqué à l'appareil de turbine (28) au cours du cycle de vagues.

14. Produit de programme d'ordinateur, comprenant des instructions lisibles par ordinateur, pouvant être exécutées pour effectuer un procédé selon la revendication 13.

Fig. 1

Typical Pelton Wheel Efficiency

Fig. 2

Select value of ideal pressure and use to calculate value of ideal speed of rotation or vice versa

Measure pressure and flow rate of fluid flow, and speed of rotation of turbine apparatus, and calculate target pressure and target speed of rotation based on the measured and ideal values

Calculate torque to be applied to turbine apparatus in dependence on the difference between the measured speed of rotation and the target speed of rotation, and apply the calculated torque to the turbine apparatus

Calculate level of opening of valves to be provided, in dependence on the difference between a measured pressure and the ideal pressure, and control the valves to provide the calculated level of opening

No — Time> Meas. time? — Yes

Determine electrical power output over measurement time and adjust value of ideal pressure (and ideal speed of rotation) in dependence on the electrical power output. Reset time to zero.

Fig. 3

Receive flow and pressure measurement signals from the flow and pressure sensors, and receive the rotational speed measurement signal ⌐100

Receive signals from spear valves representative of fractional opening of spear valves ⌐102

Determine ideal operating speed based on the ideal operating pressure ⌐104

Calculate speed of the water jets, and a nozzle flow rate, output from the spear valves from the measured pressure and fractional openings of the spear valves ⌐106

Calculate an ideal torque to apply to the flywheel shaft to get to the ideal speed within a target time ⌐108

Calculate the current torque applied to the turbine apparatus, store the calculated value, and calculate an average value of torque applied to the turbine apparatus over an averaging time from the current torque value and previously stored values ⌐110

Substract the average value of torque from the ideal torque to obtain a net reactive torque to be applied (subject to predetermined maximum and minimum values) ⌐112

Transmit control signal to generator to regenerative drive to control generator to apply the net reactive torque ⌐114

Calculate a target pressure based on the current measured rotational speed (subject to predetermined maximum and minimum values ⌐116

Calculate the flow out of accumulator to reach the target pressure within a further target time ⌐118

Add the calculated accumulator flow to the measured flow upstream of the accumulator to obtain a target nozzle flow to reach the target pressure within the further target time ⌐120

Determine nozzle openings to obtain target nozzle flow rate (subject to predetermined maximum and minimum nozzle openings ⌐122

Transmit control signal to spear valves to control spear valves to open to determined nozzle openings ⌐124

Fig. 4

Fig. 5

Fig. 6

**REFERENCES CITED IN THE DESCRIPTION**

**Patent documents cited in the description**

- WO 2006100436 A

- WO 2008094046 A